# EUROPÄISCHE PATENTANMELDUNG

(11) **EP 1 036 707 A2**
(43) Veröffentlichungstag der Anmeldung: **20.09.2000**
(21) Anmeldenummer: 99124259.5
(22) Anmeldetag: 04.12.1999
(51) Int. Cl.: B60R 9/04

(54) **Dachreling für Fahrzeuge**

(30) Priorität: 18.03.1999 DE 19912078
(71) Anmelder: JAC Products Deutschland GmbH, 42285 Wuppertal (DE)
(72) Erfinder: Lumpe, Karl-Heinz, 45549 Sprockhövel (DE); Kolodziej, Klaus, 42329 Wuppertal (DE)

(57) **Zusammenfassung**

Beschrieben wird eine Dachreling für Fahrzeuge mit einem länglichen Holm (2), Stützfüßen (4) an den Holmenden und wenigstens einer etwa längsmittig am Holm (2) angeordneten Mittelstütze (3), die sich dadurch auszeichnet, daß die Stützfüße (4) und die zumindest eine Mittelstütze (3) jeweils einstückig und materialeinheitlich mit dem Holm (2) ausgebildet sind.

## Beschreibung

Die Erfindung bezieht sich auf eine Dachreling für Fahrzeuge mit einem länglichen Holm, Stützfüßen an den Holmenden und mindestens einer etwa längsmittig am Holm angeordneten Mittelstütze.

Moderne Fahrzeuge werden in zunehmendem Maße mit Dachrelings bestückt, wobei in der Regel zwei, sich in einem Abstand und im wesentlichen parallel zur Dachfläche längs der seitlichen Dachrahmen erstreckende Dachrelings vorgesehen werden, die jeweils aus einem Holm, Stützfüßen an den Holmenden und mindestens einer etwa längsmittig am Holm angeordneten Mittelstütze bestehen. Die Stützfüße und die zumindest eine Mittelstütze tragen den Holm und stützen sich auf dem Fahrzeugdach oder darin ausgebildeten Kanälen ab.

Eine durch die DE 40 04 829 C2 bekanntgewordene Dachreling zeigt einen Holm mit zwei den Holm tragenden Stützfüßen. Zur Montage werden der Holm und die Stützfüße zusammengesteckt und die Stützfüße werden mit Gewindebolzen bestückt, deren überstehenden Enden durch Bohrungen im Dachblech hindurchgeführt werden. Auf die Gewindebolzen werden von der anderen Seite des Dachblechs her Schraubenmuttern aufgebracht.

Die DE 42 40 080 C2 zeigt eine Dachreling mit einer an einem Holm zu befestigenden Mittelstütze.

Der Aufwand bei der Herstellung einer Dachreling nach der DE 40 04 829 C2 und/oder DE 42 40 080 C2 ist beachtlich. So müssen die Holme für sich gefertigt und entsprechend der Dachkontur oftmals in zwei Ebenen gebogen werden. Auch die Stützfüße und die Mittelstützen müssen separat hergestellt und hinsichtlich der Oberfläche den Holmen angepaßt werden, was trotz hohem Aufwand nicht immer zu gewährleisten ist. Oftmals sind Glanz- oder Farbunterschiede zwischen den Stützfüßen, den Mittelstützen und den Holmen und nach erfolgter Montage ein Versatz zwischen diesen Teilen festzustellen. Von besonderem Nachteil bei Dachrelings herkömmlicher Art ist die in der Praxis nicht zu vermeidende Fugen- oder Spaltbildung zwischen den Holmen, den Stützfüßen und den Mittelstützen. Diese Fugen oder Spalte beeinträchtigen die Stilistik einer Dachreling und fördern ein Eindringen von Schmutz und damit die Gefahr einer Korrosionsbildung.

Bei einer anderen bekannten Dachreling nach der DE 42 23 898 A1 ist vorgesehen, daß die Stützfüße jeweils einstückig mit den Holmen ausgebildet sind und aus abgebogenen und aufgeweiteten Endbereichen der Holme bestehen. Hierdurch wird zwar gegenüber der Dachreling nach der DE 40 04 829 C2 eine Verbesserung erzielt, jedoch verbleibt immer noch das Problem die Mittelstützen separat herstellen, an die Holme anpassen und insbesondere auch separat montieren zu müssen.

Der Erfindung liegt hiernach die Aufgabe zugrunde eine Dachreling der eingangs genannten Art zu schaffen, die sich durch eine wesentliche Bauteilreduzierung auszeichnen soll.

Diese Aufgabe wird bei einer Dachreling für Fahrzeuge mit einem länglichen Holm, Stützfüßen an den Holmenden und mindestens einer etwa längsmittig am Holm angeordneten Mittelstütze erfindungsgemäß durch die im Anspruch 1 angegebenen Merkmale gelöst.

Die erfindungsgemäße Dachreling weist den besonderen Vorteil auf, daß zwischen dem Holm und den Stützfüßen sowie zwischen dem Holm und der zumindest einen Mittelstütze weder Fugen oder Spalte noch sichtbare Trennlinien bestehen. Vielmehr besteht die Dachreling nunmehr aus einem Guß und weist daher auch eine einheitliche Oberfläche und keine Glanzunterschiede mehr auf. Die erfindungsgemäße Dachreling ist also frei von störenden Übergängen und Trennlinien. Ein weiterer Vorteil der erfindungsgemäßen Dachreling ist die Gewichtsreduzierung gegenüber den bekannten Vorbildern. Hervorzuheben ist auch die Reduzierung der Bauteile, weil sich dadurch der Festigungsaufwand, insbesondere auch der Montageaufwand minimiert. Da es sich bei der erfindungsgemäßen Dachreling nunmehr um ein, lediglich durch Befestigungselemente zu ergänzendes Teil handelt, reduzieren sich die bei der Montage einer herkömmlichen Dachreling auftretenden Toleranzen ebenfalls.

In Weiterbildung der Erfindung kann vorgesehen sein, daß die Stützfüße und/oder die zumindest eine Mittelstütze einen sich auf einem Fahrzeugdach abstützenden Boden aufweisen. Dabei kann jeder Boden ein Einsatzelement zur Verankerung eines Befestigungselements aufweisen. Es ist auch möglich, daß jeder Boden einen darin verankerten Befestigungsbolzen aufweist.

Gemäß einer weiteren Ausgestaltung der Erfindung kann vorgesehen sein, daß der Holm der Dachreling zwei oder mehrere ring- oder kalottenförmige Vorsprünge aufweist, die gleichmäßig oder ungleichmäßig über die Holmlänge verteilt sind. Solche Vorsprünge können als Anschläge für an Dachrelings zu befestigende Querträger genutzt werden und einem ungewollten Verschieben der Querträger entgegenwirken.

Die erfindungsgemäße Dachreling kann in eloxierter oder lackierter Ausführung der Abnehmerschaft zur Verfügung gestellt werden.

Ausführungsbeispiele der Erfindung werden nachfolgend anhand der Zeichnungen näher erläutert. Es zeigen:
- Fig. 1: auf einem Fahrzeugdach angeordnete Dachrelings,
- Fig. 2: einen Längsschnitt durch einen Endbereich einer Dachreling mit Stützfuß,
- Fig. 3: einen Längsschnitt durch einen Mittenbereich einer Dachreling mit Mittelstütze und
- Fig. 4: einen Längsschnitt durch eine Dachreling aus Kunststoffmaterial.

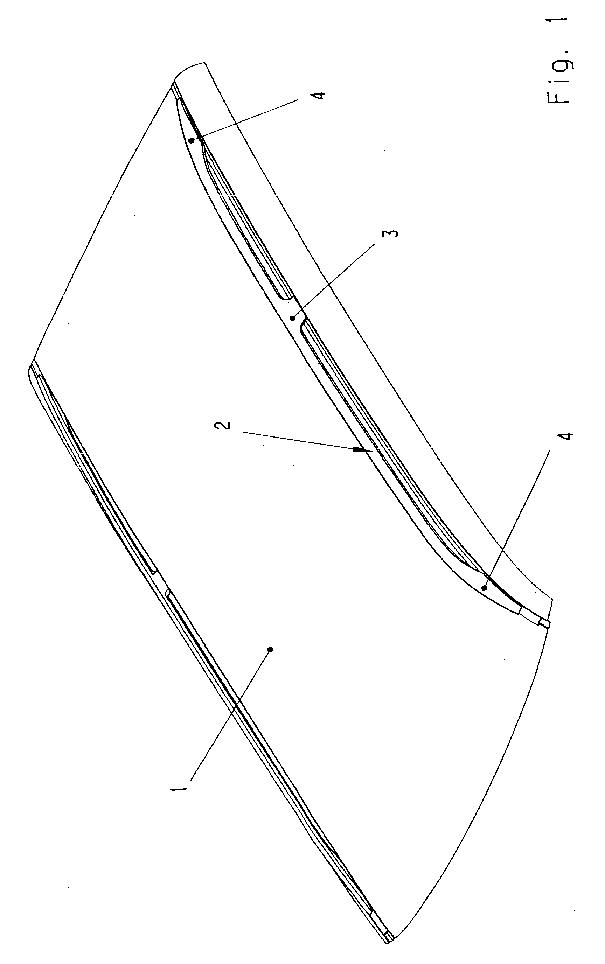

Fig. 1 zeigt zwei auf dem Dach 1 eines nicht näher dargestellten Fahrzeugs angeordnete Dachrelings. Jede Dachreling besteht aus einem Holm 2, an den Holmenden angeordneten Stützfüßen 4 und zumindest einer Mittelstütze 3.

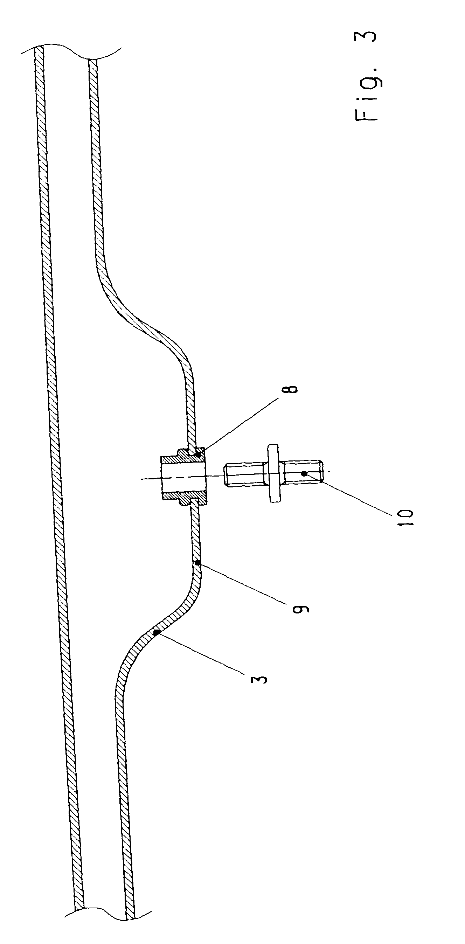

Die Dachreling nach Fig. 1 bis 3 ist aus dem Abschnitt eines Metallrohrs, insbesondere Leichtmetallrohrs gebildet. Dabei können die Endbereiche des Metallrohrs vorgebogen sein. Die Verformungsarbeit, wie das Aufweiten der Stützfüße 4 und das Herausformen der zumindest einen Mittelstütze 3 aus dem Rohrmaterial erfolgt zweckmäßigerweise in einem Werkzeug, wobei in das Rohr ein Druckmedium (Wasser, Öl oder Luft) unter hohem Druck eingepreßt wird. Die zumindest eine Mittelstütze 3 wird dabei mit einem Boden 9 ausgebildet, der mit einem Befestigungselement 8 für einen lediglich strichpunktiert angedeuteten Befestigungsbolzen 10 zu bestücken ist.

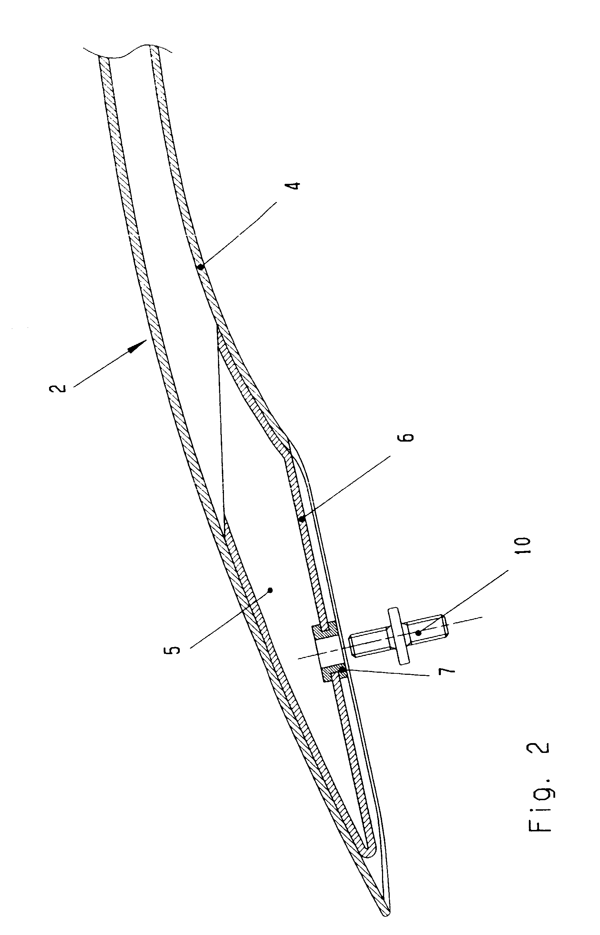

Jeder Stützfuß 4 trägt gemäß Fig. 2 ein im Fußinnern befestigtes Aufnahmeelement 5, das seinerseits in der Fußfläche 6 mit einem Befestigungselement, wie einem Gewindeeinsatz 7 für einen Befestigungsbolzen 10 bestückt sein kann. Das Aufnahmeelement 5 ist im Fußinnern festgelegt, z. B. durch eine zuverlässige Verklebung.

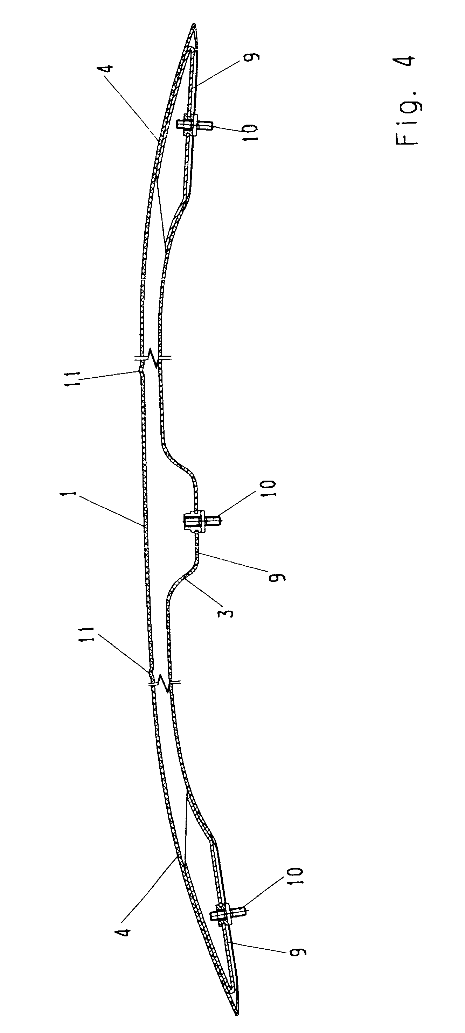

Die Dachreling nach Fig. 4 besteht aus einem einstückigen Kunststoffteil mit einem Holm 2 einer Mittelstütze 3 und Stützfüßen 4 an den Holmenden. Im Bedarfsfall können auch zwei oder mehr Mittelstützen vorgesehen sein. Die Mittelstütze 3 sowie die Stützfüße 4 weisen jeweils einen Boden 9 auf, so daß die Dachreling einen Hohlkörper bildet. Allerdings können die Böden 9 gelocht und mit Gewindeeinsätzen 7 entsprechend Fig. 2 bestückt sein zur Verbindung mit lediglich strichpunktiert angedeuteten Befestigungsbolzen 10.

Die Dachreling nach Fig. 4 kann aus einem Kunststoff-Spritzgußteil bestehen, wobei der Hohlraum durch Gasinnendruck gebildet ist. Beim Gasinnendruckverfahren wird in die Kunststoffschmelze ein unter Druck stehendes Gas eingebracht. Die Ausbildung einer Dachreling als Kunststoff-Spritzgußteil eröffnet auch die Möglichkeit einen Gewindeeinsatz 8, ein Befestigungselement 8, einen Befestigungsbolzen 10 oder dgl. als Einlegeteil zu umspritzen, so daß sich eine Dachreling herstellen läßt, die nicht nachträglich mit Befestigungselementen zu bestücken, sondern sogleich montagefertig ist, sofern eine Lackierung als nicht erforderlich angesehen wird.

Die Dachreling nach Fig. 4 kann mit besonderem Vorteil auch als Kunststoff-Blasformteil ausgebildet sein. Mit der Blasformtechnik lassen sich wie mit der Spritzgußtechnik auch komplizierte Formgebungen realisieren.

Bei allen Ausführungsformen ist es ohne weiteres möglich, den Holm 2 mit Vorsprüngen 11 zu versehen, um auf diese Weise Anschläge für einen an der Dachreling festzulegenden Querträger zu schaffen.

## Patentansprüche

1. Dachreling für Fahrzeuge mit
- einem länglichen Holm (2),
- Stützfüßen (4) an den Holmenden und
- mindestens einer etwa längsmittig am Holm (2) angeordneten Mittelstütze (3), wobei
a) der Holm (2) aus dem Abschnitt eines Metallrohrs besteht und einstückig und materialeinheitlich mit den Stützfüßen (4) und der zumindest einen Mittelstütze (3) ausgebildet ist,
b) die Stützfüße (4) aus abgebogenen und aufgeweiteten Endbereichen des Holms (2) bestehen und
c) die zumindest eine Mittelstütze (3) aus dem Holm (2) ausgeformt ist, wobei
d) die Stützfüße (4) jeweils im Fußinnern mit einem Aufnahmeelement (5) für ein Befestigungsmittel (10) zur Befestigungsanordnung der Stützfüße (4) auf einem Fahrzeugdach (1) versehen sind, während
e) die zumindest eine Mittelstütze (3) zur Befestigungsanordnung auf einem Fahrzeugdach (1) einen einstückig und materialeinheitlich mit ihr ausgebildeten Boden (9) mit einem daran angeordneten Befestigungsmittel (10) aufweist und wobei
f) die Stützfüße (4) und die zumindest eine Mittelstütze (3) durch ein Innenhochdruck nutzendes Formgebungsverfahren gebildet sind.

2. Dachreling nach Anspruch 1, dadurch gekennzeichnet, daß der Boden (9) der zumindest einen Mittelstütze (3) ein Einsatzelement (8) zur Verankerung eines Befestigungselements aufweist.

3. Dachreling nach Anspruch 2, dadurch gekennzeichnet, daß der Boden (9) der zumindest einen Mittelstütze (3) einen darin verankerten Befestigungsbolzen (10) aufweist.

4. Dachreling nach wenigstens einem der Ansprüche 1 bis 3, dadurch gekennzeichnet, daß auch die Stützfüße (4) jeweils mit einem Boden ausgebildet sind und daß in jedem Boden ein Befestigungsbolzen (10) verankert ist.

5. Dachreling nach wenigstens einem der Ansprüche 1 bis 4, dadurch gekennzeichnet, daß der Holm (2) zwei oder mehrere ring- oder kalottenförmige Vorsprünge (11) aufweist, die gleichmäßig oder ungleichmäßig über die Holmlänge verteilt sind.

6. Dachreling nach wenigstens einem der Ansprüche 1 bis 5, dadurch gekennzeichnet, daß dieselbe eloxiert oder lackiert ist.
